# DEMANDE DE BREVET EUROPEEN

(11) **EP 0 618 002 A1**
(43) Date de publication de la demande: **05.10.1994**
(21) Numéro de dépôt: 94400319.3
(22) Date de dépôt: 14.02.1994
(51) Int. Cl.: B01J 2/30, C05G 3/00

(54) **Composition et procédé d'antimottage pour engrais**

(30) Priorité: 16.02.1993 FR 9301723
(71) Demandeur: C F P I, F-92233 Gennevilliers Cédex (FR)
(72) Inventeur: Schapira, Joseph, F-75015 Paris (FR); Cheminaud, Jean-Claude, F-95220 Herblay (FR); Petitbon, Pascal, F-92230 Gennevilliers (FR); Imbert, Dominique, F-92400 Courbevoie (FR)
(74) Mandataire: Koch, Gustave

(57) **Abrégé**

Composition d'antimottage pour engrais comprenant une solution aqueuse d'au moins un agent tensio-actif et au moins un polymère de poids moléculaire élevé soluble dans ladite solution aqueuse, caractérisée par le fait que l'agent tensio-actif est constitué par un sel d'acide ester phosphorique.

## Description

L'invention a pour objet une composition et un procédé d'antimottage des engrais du groupe comprenant en particulier l'urée et, plus généralement, le nitrate, le sulfate, le chlorure et les phosphates d'ammonium, le chlorure de potassium, le superphosphate de calcium et les mélanges de ces produits.

On connaît déjà des compositions d'antimottage pour engrais comportant un agent tensio-actif et un polymère de poids moléculaire élevé soluble dans l'eau ou dans la solution de l'agent tensio-actif dans l'eau.

Des compositions d'antimottage de ce genre sont décrites dans le brevet US-A-3 388 990 qui prévoit
- comme agent tensio-actif, notamment le dodécylsulfate de sodium, le dodécylbenzène-sulfonate de soude, le butylnaphtalène-sulfonate de soude, les sels d'acides gras, les savons d'acides résiniques, les sels des monoalkylsulfates, les sels des acides alkylbenzène- et naphtalène sulfoniques, les sels d'acides oléfine-sulfoniques, les sels d'acides dialkyl-sulfosucciniques et les sels de sulfates de polyéthoxyle,
- comme polymères solubles dans l'eau, notamment les alcools polyvinyliques et leurs acétals, les acétate et propionate de polyvinyle, le polyvinyl-pyrrolidone, l'acide polyacrylique et ses sels, le polyacrylamide, l'acide polyméthacrylique et ses sels, les résines urée- et mélamine-formaldéhyde solubles dans l'eau, les polyéthylèneglycols, les méthyl- et les carboxyméthyl-celluloses.

Compte tenu des exigences toujours accrues des utilisateurs, la Société Demanderesse s'est donnée comme but de mettre au point des compositions d'antimottage du genre en question qui soient plus performantes que celles qui existent déjà.

Et elle a le mérite d'avoir trouvé qu'un effet d'antimottage particulièrement spectaculaire était obtenu en ayant recours dans lesdites compositions, à titre d'agent tensio-actif, à au moins un sel d'acide ester phosphorique, étant rappelé que, par le terme acide ester phosphorique, on désigne le résultat de la réaction de P₂O₅, du mélange de P₂O₅ + H₃PO₄, de POCl₃ ou de PCl₅ avec au moins un composé à groupes hydroxyles, en particulier avec au moins un alcool (voir à cet égard notamment l'ouvrage "Organic Phosphorous Compounds", Volume 6, page 222 et suivantes, par G.M. Kosolapoff et L. Maier).

Il s'ensuit que la composition d'antimottage pour engrais conforme à l'invention, qui comprend une solution aqueuse d'au moins un agent tensio-actif et au moins un polymère de poids moléculaire élevé soluble dans ladite solution aqueuse, est caractérisée par le fait que l'agent tensio-actif est constitué par un sel d'acide ester phosphorique.

Suivant un mode de réalisation avantageux de la susdite composition d'antimottage, l'acide ester phosphorique est choisi dans le groupe comprenant les acides alcoylphosphoriques éventuellement éthoxylés, les mélanges de mono- et de diesters étant préférés.

Suivant un autre mode de réalisation avantageux de la susdite composition d'antimottage, l'acide ester phosphorique est choisi dans le groupe des polymères d'oxydes d'alkylène dont les fonctions hydroxyles libres sont au moins partiellement phosphatées.

Suivant un autre mode de réalisation avantageux de la susdite composition d'antimottage, l'acide ester phosphorique est mis en oeuvre sous la forme d'un sel de métal alcalin, d'ammonium, d'amine ou d'alcanolamine, les trois derniers types de sels étant préférés.

Suivant un autre mode de réalisation avantageux de la susdite composition d'antimottage, le polymère de poids moléculaire élevé soluble dans la solution d'agent tensio-actif est choisi dans le groupe comprenant les alcools polyvinyliques, les polyvinylpyrrolidones, la résine d'urée-formaldéhyde, le polyéthylèneglycol, les dérivés de la cellulose dont la carboxyméthylcellulose, les acides polycarboxyliques et leurs sels, les polyacrylamides, l'acide polyvinylsulfonique et ses sels, l'éther polyvinylméthylique, les copolymères d'acide maléique et d'acide acrylique, les copolymères d'acide méthacrylique ou d'acrylamide, les copolymères d'éther-méthylvinylique, les copolymères de vinylpyrrolidone et d'acétate de vinyle ou d'acrylamide.

Suivant un autre mode de réalisation avantageux de la susdite composition d'antimottage, le rapport en poids entre le polymère et l'agent tensio-actif est de 1/10 à 10/1, de préférence de 1/10 à 5/1 et plus préférentiellement encore de 1/10 à 1/2.

Suivant un autre mode de réalisation avantageux de la susdite composition d'antimottage, celle-ci présente la plus grande concentration possible en polymère et en agent tensio-actif, cette concentration étant notamment de 5 à 50% en poids, de préférence de 20 à 50% en poids.

Pour préparer la composition d'antimottage conforme à l'invention, on peut solubiliser le polymère de poids moléculaire élevé directement dans une solution aqueuse concentrée de l'agent tensio-actif, en chauffant si nécessaire.

Le procédé d'antimottage conforme à l'invention est caractérisé par le fait que l'on applique sur les particules de l'engrais à traiter soit la composition conforme à l'invention, soit simultanément mais séparément l'un de l'autre le polymère et l'agent tensio-actif constitutifs de ladite composition.

Suivant un mode de réalisation avantageux du procédé d'antimottage conforme à l'invention, on applique sur les particules constitutives de l'engrais à traiter une quantité de la composition conforme à l'invention suffisante pour apporter une quantité de matière sèche de polymère et d'agent tensio-actif représentant, par rapport à la matière sèche de l'engrais, une proportion de 0,001 à 0,5%, de préférence de 0,005 à 0,05% et, plus préférentiellement encore, de 0,005 à 0,02% en poids.

Suivant un autre mode de réalisation avantageux du susdit procédé, la composition conforme à l'invention est appliquée sur l'engrais par pulvérisation, sa température étant avantageusement de 20 à 50°C, ledit engrais qui a de préférence acquis au moment de l'application la presque totalité de ses propriétés finales et qui se trouve alors sur une bande transporteuse ou, de préférence, sur un tambour d'enrobage, présentant une température avantageusement de 20 à 65°C.

L'invention vise également, à titre de produit industriel nouveau, un engrais du groupe comprenant en particulier l'urée et, plus généralement, le nitrate, le sulfate, le chlorure et les phosphates d'ammonium, le chlorure de potassium, le superphosphate de calcium et les mélanges de ces produits, cet engrais étant caractérisé par le fait que ses particules constitutives comportent un revêtement constitué par les composants de la composition conforme à l'invention.

Elle pourra être encore mieux comprise à l'aide des exemples non limitatifs qui suivent et dans lesquels sont illustrés des modes de réalisation avantageux de l'invention.

### EXEMPLE 1

On prépare une composition d'antimottage conforme à l'invention (composition A) et deux compositions d'anti-mottage selon l'art antérieur (compositions B et C).

Dans les trois cas, le polymère de poids moléculaire élevé est constitué par de l'alcool polyvinylique PVA obtenu par hydrolyse (degré d'hydrolyse égal à 83%) à partir de l'acétate de polyvinyle correspondant.

L'agent tensio-actif est constitué
- par le n-hexylphosphate d'ammonium, dans le cas de la composition A,
- par respectivement le laurylsulfate de sodium et l'isopropyl-naphtalènesulfonate de sodium dans le cas des compositions B et C.

Le n-hexylphosphate d'ammonium est préparé par action de l'anhydride phosphorique sur le n-hexanol suivant un rapport alcool/P de 3/2, soit 3 moles d'alcool pour 1 mole de P₂O₅.

Dans le cas des trois compositions, la teneur
- en PVA est de 4% en poids (en sec),
- en agent tensio-actif est de 22% (en sec).

Les compositions A, B et C sont donc identifiées comme suit:
- composition A:: PVA / n-hexylphosphate d'ammonium (3/2)
- composition B:: PVA / laurylsulfate de sodium
- composition C:: PVA / isopropyl-naphtalènesulfonate de Na.

On utilise les compositions A, B et C pour appliquer un traitement d'antimottage à un engrais constitué par de l'urée prillée.

Pour ce faire, on pulvérise, à l'intérieur d'une bétonnière, successivement les trois compositions sur trois charges distinctes de 10 kg chacune de ladite urée; les compositions A, B et C sont utilisées chacune en une quantité qui est de 0,05% en poids par rapport à l'urée et qui apporte une quantité de matière sèche de polymère et d'agent tensio-actif qui représente une proportion de 0,013% en poids par rapport à la matière sèche de l'urée.

Pour l'appréciation du résultat du susdit traitement d'antimottage, on procède comme suit.

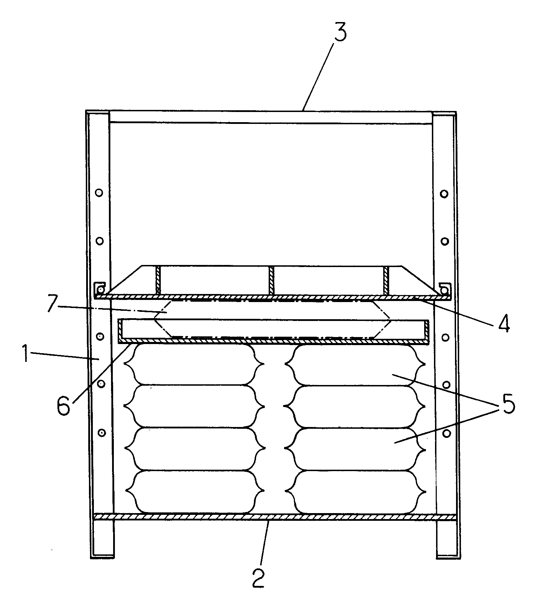

Les trois charges de 10 kg d'urée traitées respectivement par les compositions A, B et C sont réparties chacune dans des sacs de polyéthylène que l'on empile dans un module de mottage du type de celui montré à la figure unique.

Le susdit module de mottage comprend une armature métallique constituée de montants 1, d'un plateau de charge 2, d'entretoises 3 et d'un plateau fixe 4.

Les sacs 5 en polyéthylène, remplis de produit à tester, sont empilés comme montré sur le plateau 2.

Un plateau 6 portant un coussin de levage 7 est posé sur la pile de sacs. En gonflant le coussin à l'air comprimé entre le plateau mobile 6 et le plateau fixe 4, on transmet une pression à la pile de sacs.

Cette pression appliquée est variable et peut simuler une pile de sacs de 12 m de haut.

L'engrais est maintenu sous pression pendant un temps plus ou moins long, en général de 10 à 45 jours, parfois de plusieurs mois.

Dans le cas présent, la pression appliquée est de 0,6 kg/cm².

La température de l'expérience est la température ambiante et la durée de 10 jours.

A l'issue de cette période de 10 jours, les sacs sont ouverts et le degré d'agglomération est déterminé par l'évaluation de la dureté des mottes à l'aide d'un dynamomètre. En général, la dureté des mottes est comprise entre 0 et 100 N (Newton) mais peut atteindre 200 N pour les témoins non traités. Plus la dureté est basse et plus le degré d'agglomération ou de mottage est bas.

Dans le cas présent, les valeurs enregistrées pour la dureté des mottes (moyenne de 4 déterminations) est:
- pour la composition A (invention) : 0
- pour la composition B (art antérieur): 49 N
- pour la composition C (art antérieur): 23 N.

Dans le cas d'une expérience témoin (aucun traitement d'antimottage), la valeur trouvée est supérieure à 150 N.

La supériorité de la composition conforme à l'invention résulte clairement de la comparaison de ces valeurs.

### EXEMPLE 2 : Etude de l'influence du degré d'estérification.

On reprend la composition A.

L'engrais est constitué par de l'urée prillée.

On prépare par ailleurs trois autres compositions conformes à l'invention D, E et F en utilisant toujours le même polymère (le PVA de l'exemple 1) dans les mêmes proportions, mais en utilisant trois agents tensio-actifs différents (la proportion restant celle retenue pour la composition A), à savoir:
- le n-hexylphosphate d'ammonium préparé à partir de P₂O₅ et de l'alcool en un rapport pondéral alcool/P de 3/1 (composition D),
- le n-butyl-n-hexylphosphate d'ammonium préparé à partir de P₂O₅ et d'un mélange 50/50 en poids des deux alcools; dans un premier cas, le rapport alcool/P est de 3/2 (composition E) et, dans un deuxième cas, de 3/1 (composition F).

Les compositions D, E et F sont identifiées comme suit:
- composition D:: PVA / n-hexylphosphate de NH₄(3/1)
- composition E:: PVA / n-butyl-n-hexylphosphate de NH₄(3/2)
- composition F:: PVA / n-butyl-n-hexylphosphate de NH₄(3/1).

Au titre de l'art antérieur, on utilise les compositions B et C.

On applique chacune des compositions A, D, E et F en une quantité analogue à celles prévues à l'exemple 1; la proportion de matière sèche de polymère et d'agent tensio-actif est toujours de 0,013% par rapport à la matière sèche de l'urée.

On détermine le résultat de chacun de ces traitements d'antimottage en procédant comme à l'exemple 1, à la différence près que la pression est maintenue pendant 20 jours.

On mesure la dureté des mottes comme à l'exemple 1 et on trouve:
- pour la composition A 18 N
- pour la composition B 90 N
- pour la composition C 72 N
- pour la composition D 25 N
- pour la composition E 23 N
- pour la composition F 49 N
- pour le témoin > 150 N.

L'examen de ces valeurs montre que, par rapport à l'art antérieur, les performances enregistrées avec les compositions conformes à l'invention sont toujours supérieures et ce pour différents degrés d'estérification.

### EXEMPLE 3: Etude de l'influence de l'agent neutralisant.

On reprend la composition D de l'exemple 2 et on prépare deux compositions G et H conformes à l'invention, différant de la composition D par le fait que l'agent neutralisant de l'acide ester phosphorique est, au lieu du NH₄OH (composition D), constitué par la soude (composition G) et par la monoéthanolamine (composition H).

On applique les compositions D, G et H à un engrais constitué par de l'urée prillée.

La quantité de matière sèche d'agent tensio-actif et de polymère représente toujours une proportion de 0,013% en poids par rapport à la matière sèche de l'urée.

Les performances d'antimottage des compositions D, G et H sont déterminées comme à l'exemple 2 et les valeurs trouvées pour la dureté des mottes sont:
- pour la composition D 25 N
- pour la composition G 49 N
- pour la composition H 8 N
- pour le témoin > 150 N.

L'examen de ces résultats montre qu'il est avantageux d'avoir recours, comme agent neutralisant de l'acide ester phosphorique, à l'ammoniaque et plus particulièrement à une alcanolamine, de préférence la monoéthanolamine.

### EXEMPLE 4: Etude de l'influence de la quantité de composition d'antimottage mise en oeuvre.

On prépare une composition d'antimottage K conforme à l'invention, différant de la composition E par le fait que l'agent tensio-actif est préparé à partir de P₂O₅ et de quantités égales de n-butanol et de 2-éthyl-hexanol suivant le rapport alcool/P de 3/2.

On reprend par ailleurs la composition E et on examine, pour les compositions E et K, l'influence de la quantité de composition d'antimottage mise en oeuvre.

On effectue pour chacune des compositions E et K deux expériences dans l'une desquelles la quantité appliquée est de 0,05% en poids par rapport à l'engrais (quantité de matière sèche de polymère et d'agent tensio-actif correspondant à une proportion de 0,013% en poids par rapport à la matière sèche de l'urée), comme dans l'exemple précédent, alors qu'elle est de 0,03% dans l'autre (quantité de matière sèche de polymère et d'agent tensioactif correspondant à une proportion de 0,0075% en poids par rapport à la matière sèche de l'urée traitée).

On détermine les performances du traitement comme à l'exemple 2.

Les valeurs trouvées pour la dureté des mottes sont:

| | Dureté pour une quantité de | |
|---|---|---|
| | 0,03% | 0,05% |
| Composition E | 15 N | 10 N |
| Composition K | 8 N | 4 N |

L'examen de ces résultats montre que l'effet du traitement reste excellent même à la très faible dose de 0,03%.

### EXEMPLE 5

On prépare quatre compositions, respectivement L, M, N et P, conformes à l'invention.

Les compositions L et M diffèrent respectivement des compositions E et K par le fait que l'agent neutralisant est la monoéthanolamine MEA. Elles sont donc identifiées comme suit:
- Composition L:: PVA / n-butyl-n-hexylphosphate de MEA (3/2)
- Composition M:: PVA / n-butyl-2-éthyl-hexylphosphate de MEA (3/2).

La composition N est caractérisée par le fait que l'agent tensio-actif est un acide ester-phosphorique d'un polypropylèneglycol PPG d'un poids moléculaire de 1000 neutralisé par NH₄OH; la composition P diffère de la composition N par le fait que l'agent neutralisant est la MEA.

Ces deux compositions sont donc identifiées comme suit:
- Composition N: PVA / PPG phosphate de NH₄ (3/2)
- Composition P: PVA / PPG phosphate de MEA (3/2).

On a déterminé les performances d'antimottage en procédant comme à l'exemple 1 après avoir appliqué à de l'urée prillée la même quantité de chacune des compositions testées, c'est-à-dire la même proportion de matière sèche de polymère et d'agent tensio-actif par rapport à la matière sèche de l'urée que dans l'exemple 1.

A titre de comparaison, on a déterminé dans les mêmes conditions les performances d'antimottage d'un produit du commerce vendu sous la marque "URESOFT 150" par la Société Kao Soap (essentiellement à base de laurylsulfate de sodium).

Les résultats des mesures de la dureté des mottes (mêmes conditions qu'à l'exemple 1) sont réunis dans le tableau I.

**TABLEAU I**

| Composition d'antimottage | Dureté des mottes en N |
|---|---|
| URESOFT 150 | 30 |
| E | 3 |
| L | 0 |
| K | 0 |
| M | 0 |
| N | 8 |
| P | 3 |
| Témoin | 120 |

A L'examen de ces résultats, la supériorité des compositions conformes à l'invention apparaît clairement.

## Revendications

1. Composition d'antimottage pour engrais comprenant une solution aqueuse d'au moins un agent tensio-actif et au moins un polymère de poids moléculaire élevé soluble dans ladite solution aqueuse, caractérisée par le fait que l'agent tensio-actif est constitué par un sel d'acide ester phosphorique.

2. Composition d'antimottage selon la revendication 1, caractérisée par le fait que l'acide ester phosphorique est choisi dans le groupe comprenant les acides alcoylphosphoriques éventuellement éthoxylés, les mélanges de mono- et de diesters étant préférés.

3. Composition d'antimottage selon l'une des revendications 1 et 2, caractérisée par le fait que l'acide ester phosphorique est choisi dans le groupe des polymères d'oxydes d'alkylène dont les fonctions hydroxyles libres sont au moins partiellement phosphatées.

4. Composition d'antimottage selon l'une des revendications 1 à 3, caractérisée par le fait que l'acide ester phosphorique est mis en oeuvre sous la forme d'un sel de métal alcalin, d'ammonium, d'amine ou d'alcanolamine, les trois derniers types de sels étant préférés.

5. Composition d'antimottage selon l'une des revendications 1 à 4, caractérisée par le fait que l'agent tensio-actif est choisi dans le groupe comprenant le n-hexylphosphate d'ammonium, le n-butyl-n-hexylphosphate d'ammonium, le n-hexylphosphate de sodium, le n-hexylphosphate de monoéthanolamine, le n-butyl-n-hexylphosphate de MEA et le n-butyl-2-éthyl-hexylphosphate de MEA.

6. Composition d'antimottage selon l'une des revendications 1 à 5, caractérisée par le fait que le polymère de poids moléculaire élevé soluble dans la solution d'agent tensio-actif est choisi dans le groupe comprenant les alcools polyvinyliques, les polyvinylpyrrolidones, la résine d'urée-formaldéhyde, le polyéthylèneglycol, les dérivés de la cellulose dont la carboxyméthyl-cellulose, les acides polycarboxyliques et leurs sels, les polyacrylamides, l'acide polyvinylsulfonique et ses sels, l'éther polyvinylméthylique, les copolymères d'acide maléique et d'acide acrylique, les copolymères d'acide méthacrylique ou d'acrylamide, les copolymères d'étherméthylvinylique, les copolymères de vinylpyrrolidone et d'acétate de vinyle ou d'acrylamide.

7. Composition d'antimottage selon l'une des revendications 1 à 6, caractérisée par le fait que le rapport en poids entre le polymère et l'agent tensio-actif et de 1/10 à 10/1, de préférence de 1/10 à 5/1 et plus préférentiellement encore de 1/10 à 1/2.

8. Procédé d'antimottage caractérisé par le fait que l'on applique sur les particules de l'engrais à traiter soit la composition selon l'une des revendications 1 à 7, soit simultanément mais séparément l'un de l'autre le polymère et l'agent tensio-actif constitutifs de ladite composition.

9. Procédé d'antimottage selon la revendication 8, caractérisé par le fait que l'on applique sur les particules constitutives de l'engrais à traiter, une quantité de la composition selon l'une des revendications 1 à 7 suffisante pour apporter une quantité de matière sèche de polymère et d'agent tensio-actif représentant, par rapport à la matière sèche de l'engrais, une proportion de 0,001 à 0,5%, de préférence de 0,005 à 0,05% et, plus préférentiellement encore, de 0,005 à 0,02% en poids.

10. Procédé d'antimottage selon l'une des revendications 8 et 9, caractérisé par le fait que la composition selon l'une des revendications 1 à 7 est appliquée sur l'engrais par pulvérisation, sa température étant avantageusement de 20 à 50°C, ledit engrais qui a de préférence acquis au moment de l'application la presque totalité de ses propriétés finales et qui se trouve alors sur une bande transporteuse ou, de préférence, sur un tambour d'enrobage, présentant une température avantageusement de 20 à 65°C.

11. Engrais du groupe comprenant en particulier l'urée et, plus généralement, le nitrate, le sulfate, le chlorure et les phosphates d'ammonium, le chlorure de potassium, le superphosphate de calcium et les mélanges de ces produits, caractérisé par le fait que ses particules constitutives comportent un revêtement constitué par les composants de la composition selon l'une des revendications 1 à 7.
